# EUROPEAN PATENT APPLICATION

(11) **EP 1 326 185 A1**
(43) Date of publication of application: **09.07.2003**
(21) Application number: 02360007.5
(22) Date of filing: 08.01.2002
(51) Int. Cl.: G06F 17/30

(54) **Offline behaviour analysis for online personalisation of value added services**

(71) Applicant: ALCATEL, 75008 Paris (FR)
(72) Inventor: Godon, Marc, 1840 Londerzeel (BE); Defloor, Michel, 3012 Leuven (BE)
(74) Representative: Rausch, Gabriele, Dr.

(57) **Abstract**

The invention comprises a method for adapting Internet contents and/or services offered by providers to an end user, wherein the user uses a terminal to connect temporarily to the Internet, wherein a process running on the terminal tracks the end user's behaviour and/or scans stored data on the terminal while the terminal is idle and/or offline, wherein said process searches for and collects end user specific information, wherein said process transfers said collected information or information about the collected information to said Internet service provider and/or content provider, while the terminal is online and/or idle, to control and/or amend said Internet contents and/or services.

## Description

### Technical Field of the Invention

The invention describes a method and devices for adapting Internet contents or services offered by providers to an end user, wherein the user uses a terminal to connect temporarily to the Internet.

### Prior Art

In environments where many different end users connect to Internet portals there is a need to personalize the content and the advertisements offered to the users. Choosing user specific banner increases the efficiency of advertising.
In known systems end users set up their preferences by configuring each service they are using manually. The configuration has to be done while the user is online.
There maybe also online services or applications that are able to track the behaviour of the user by analysing the content of the information, the user access or loads. This can be done by the content provider which publishes a portal or by the Internet provider, which might track the information exchange between the end user and the content provider.

### Background of the invention

Both approaches have severe disadvantages. The tracking of the user behaviour is limited by the information the content provider offers. When the user changes the portal or the content provider, the former provider has not the possibility of continuing the scanning process since the content provider cannot keep the control over the information provided by others.
The second approach, scanning the IP-packets, exchanged between the user and the content provider, needs a lot of calculation power. Each packet has to be analysed in its context, so the system analysing the packets needs a big memory and strong CPUs. For a powerful analysis the system has to analyse the protocol the end-user uses to exchange information first. These protocols might be http, dns-request, smtp, ftp etc. After determining the protocol, the content of the packets can be analysed.
Another problem is that, most of the end users are more offline than online. This surfing behaviour limits the efficiency of the known solutions, since both approaches are limited to the online time.

### Summary of the invention

The solution proposed here solves these problems by tracking the user's behaviour offline or while the system is idle, using a process that monitors the end user's terminal.
When the user is offline, his behaviour is tracked, his preferences are analysed and the configuration of the terminal is examined.
The information gathered hereby (e.g. desktop preferences, analysis of the content of hard disks, semantic analysis and synthesis of documents, frequency of the use of applications) is used for the configuration and set-up of the end-user's preferences for services and content being online.
For example, the offline behaviour is used for the actualisation of the online preferences and configuration set-up. Advertisements shown to the end-user are selected on the basis of the end-user's offline profile (the end user's interest has been detected offline). Colours used in the GUI of an online service are the same as used in the colour scheme of the end-user's screen (e.g. Windows, Mac, Linux or other Systmes) background. Analysis of the end user's personal files on the hard disk of his terminal shows his interest in MP3 and MPEG. The personalized portal, which is then provided by the content provider, offers a lot of music and movies-related news and links.
To prevent a violation of the end users personal rights the process can have integrated extensions, which apply the necessary and sufficient privacy negotiation techniques (as they are e.g. imposed by a regulator). For example: The end user can be asked about which kind of information may be distributed. Moreover, the end user may define the areas of the computer being accessible to the analysing process.

A big advantage of the method is the optimised personalization of online services. This is a benefit for the end-users (more user friendly) and for the Internet provider (customer retention, larger revenue generation out of more accurate and more valuable personalized advertisements).
All Internet providers can optimise their relationship with the end user, and generate more money.

### Detailed Description

The invention comprises a method for adapting Internet contents and/or services offered by providers to an end user, wherein the user uses a terminal to connect temporarily to the Internet. The terminal is for example a PC, gaming console, PDA, (UMTS enabled) GSMs -terminals etc. running a standard Operating System (OS). On this terminal runs a process tracking the end user's behaviour or scanning stored data on the terminal while the terminal is idle and/or offline. Today's computers are most of the time offline (Though always-on is becoming more important). It should mentioned that the invention can also be used with terminals that are permanent online. Therefore, a detailed analysis is more powerful while being offline. In a preferred embodiment, the process analysis the terminal only when the system is idle or when the processor has got a poor workload. This feature reduces the performance loss for the end user.
To get the needed information about the user's behaviour and his interests the process searches for end user specific information and collects them. In a preferred embodiment, the collected information is categorized to make it easier to find the right services and contents for the end user. Possible categories are sport, culture, politics, financial news etc. The categories may have a hierarchical structure with subcategories. To find the right information the collected information is evaluated statistically, in particular by the frequency of occurrence.
An easy way to analyse the profile of the end user is to scan recently created or modified files or other data structures that have been used frequently. On a terminal with an Internet browser, files like cookies or temporary html files may lead to a detailed profile. By analysing emails, the process may also find behaviour patterns. The subscription of email lists is an indication for a special interest. In a preferred embodiment, the files are scanned using rules and text patterns. These rules and text patterns are well known in the state of the art.
The installed programs and the running processes on the terminal and the frequency of using said processes or programs also gives a detailed perspective of the user's preferences.

The analysis of the collected information may be carried out in several ways.

In the first approach, the collected information is analysed on the terminal, and the result (e.g. the interesting categories) is forwarded to the provider, who changes the content generally or only for this user. This approach reduces the net traffic and the payload of a central server.
The second approach sends the collected information to the provider, who analysis the information to extract the needed information. This approach has the advantage, that new algorithm can be implemented on a central server. This keeps the update process simple.
The preferred solution is a mix mode of the above-mentioned approaches. Some of the colleted information is analysed on the terminal and the information that could not be assigned to a category is sent to the server. There are also other possible strategies.

To be in accordance with the demands of the users, the activity of the process can be limited by configuration parameters. The user can manually determine the frequency of scans. Furthermore, the user can limit the types and areas of stored data, in which the process is allowed to search. The user can also choose the type of running application that is allowed to be observed. There are further possibilities of restricting the access of the process to private data, which are not mentioned here, but which are also part of the invention.

A further part of the invention is a device providing collected information to adapt Internet contents or services offered by providers to an end user. This device is normally a PC running software that provides an Internet access and the tools to navigate in the Internet. A network adapter connects the device at least temporarily to the network. This network adapter is a modem, an Ethernet Adapter an ISDN adapter or other similar connectors.

Furthermore, the terminal has got a data storage storing programs and user specific information. This data storage is directly connected to the device or it is connected via a network. The last approach can be a disk less client.
A processing unit, e.g. a processor, runs a process that becomes active, when the device is offline or is idle or at low load, so that there is no impact on the performance of the end user's tasks..In the preferred embodiment, the processing unit starts the process, when the device is offline and is idle. When the status of the device changes the activity of the process is reduced or even stopped. The process implements parts of the above-mentioned method. The process tracks the end user's behaviour and scans the information on the data storage wherein said process collects user specific information, e.g. from files like cookies, temporary html files, emails using rules and text patterns.
The so collected specific information is transferred to a access, content or service provider. In an alternative embodiment, only the information about the collected information is transferred. This extract includes only the categories, classes and themes the user is interested in. This information is transmitted to the Internet access, content or service provider and content provider, while the terminal is online. In a preferred version, the information is transmitted when the device is idle.

In the most preferable embodiment, both ways of transmitting data are combined. Some of the data will be transmitted without being analysed and the rest will be sent analysed. It depends on the complexity of the algorithm and the amount of data needed to calculate a reasonable result which of type of data is sent.

The result of the analysis is similar to the above mentioned result. In the preferred embodiment, the collected information is categorized and may have hierarchical structure, wherein the collected information is evaluated statistically. Furthermore, the device collects information about the installed programs, the running processes on the terminal and the frequency of using the processes or the programs.
In the preferred embodiment said device is a PC and the process is implemented in software.

Another part of the invention is a server that collects the information from the client. This server can also offer the content or the services mentioned earlier. Whereas a stand-alone system can easily be scaled to increase the throughput. This server has got an interface that allows the access to the content or the services offered to the end user. This interface may include a physical device, e.g. a network card, if the server doesn't offer the content itself. If the server is also a content sever, then that device may be a software interface to the content service or other services, which have to be amended.
A processing unit running a process analysing user specific information, that have been transmitted from the client. The process determines the content or service that is offered to the end user and that have to be amended. After the analysis and the successful search for the content, that has to be changed, the content or services are adapted by sending a new content or by sending configuration parameters including e.g. identifier of the user, categories of interest, personal preferences etc.. Other parameters and content combination may also be exchanged.

In a preferred embodiment the server comprises also means that provide said contents and services. These services are web-services, gopher services, telnet services, database services, personalized portals, ftp services etc. The user specific information may lead to special banners, links, designs (layout), files, newsgroups, chat panel etc.
In this embodiment, the server should comprise means to identify the end-user connected to said services, to provide user specific information. This identification can be enabled by the IP-address, a special cookie or login information.
Other user identification methods can also be used e.g. card reader, or iris detection, voice recognitions and fingerprint analysis. These methods are normally implemented on the terminal.
The content used for the amendment of the existing services and web-pages can be stored in a database. This allows a fast access to the relevant data. Furthermore, the stored information is classified and categorized. Using the collected interest of the user, it is easy to select the correct content. This can be done by a simple and fast query.

In the preferred embodiment, the server comprises a module analysing and classifying user specific information, in particular by using search patterns and statistical algorithms. These patterns, rules and algorithms can be complex. Possible values are the probability distributions of special words or of all words. On this basis, a number of synonyms can be determined. These synonyms allow the access to the database.
The best performance is achieved when the data intensive analysis is made by the client and the compute intensive analysis by the server.
Another feature is the compressed information exchange between the client and the server. This increases the throughput. To avoid security objection the information exchange is encrypted.

Although no multiple referenced claims are drawn, all reasonable combinations of the features in the claims shall be disclosed.

### Description of the drawings

For a more complete understanding of the present invention, reference is established to the following description made in connection with accompanying drawings in which:
Fig. 1 Shows a network consisting of a client with a storage area being connected to the Internet, of a collecting server, that collects the information from the client, of a content and service server being manipulated by the collecting server;
Fig. 2 Shows a network consisting of a client with a storage area being connected to the Internet, consisting of a combined collecting and service server, that collects the information from the client;

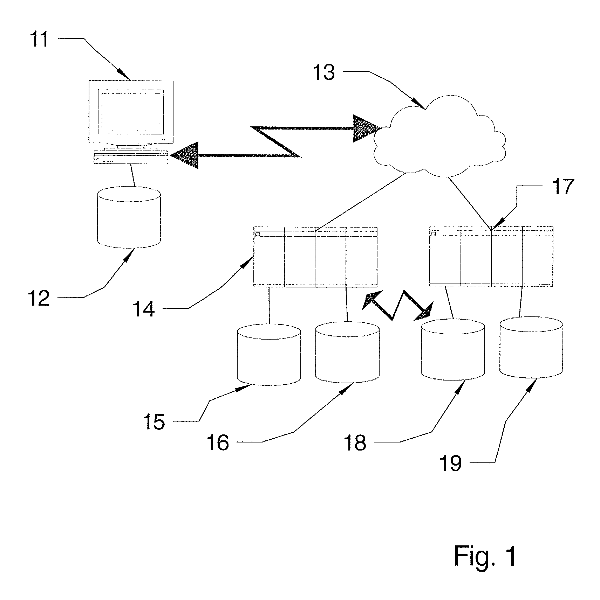

In Figure 1, a client 11 having a storage area 12 and a processor is connected via the Internet 13 to a collecting server 14. The collecting server 14 collects and provides user specific information 15. The client collects user specific information while being off line. The detailed method has been mentioned above. Using the user specific information, the collecting server 14 is able to modify the content 18 and the services of the content server 17. A collection of possible content may be stored in a separate database 16. This content may be categorized and can be copied to the database 18 of the content server 17.
The content server 17 has access to a database 19 allowing to identify the end user. After the identification, the content server 17 loads the specific content form the database 18 and provides it to the user.

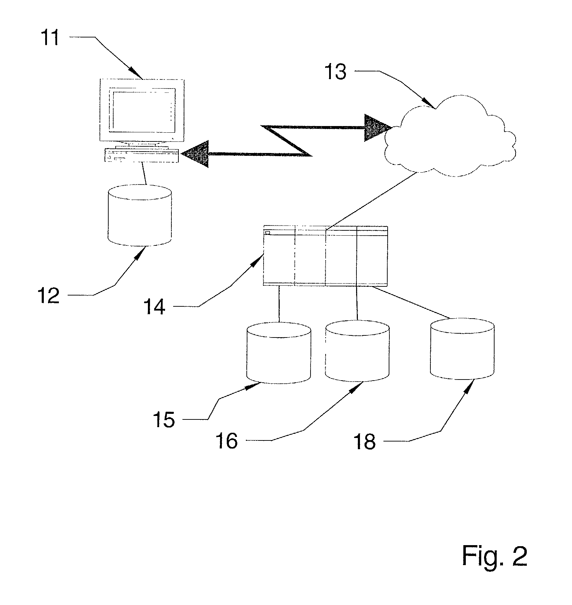

Figure 2 shows a combined collection and content sever 17. This server is able to collect user specific information and to amend the content of the services.

## Claims

1. Method for adapting Internet contents and/or services offered by providers to an end user, wherein the user uses a terminal to connect temporarily or permanently to the Internet,
wherein a process running on the terminal tracks the end user's behaviour and/or scans stored data on the terminal while the terminal is idle and/or offline and/or at low load,
wherein said process searches for and collects end user specific information,
wherein said process transfers said collected information or information about the collected information to said Internet service provider and/or content provider, while the terminal is online and/or idle and/or at low load, to control and/or amend said Internet contents and/or services.

2. The method according to claim 1, wherein the collected information is categorized and may have a hierarchical structure and/or
wherein the collected information is evaluated statistically, in particular by the frequency of occurrence.

3. The method according to claim 1, wherein cookies, temporary html files, emails and other files are scanned using rules and/or text patterns and/or,
wherein information about the installed programs and/or the running processes on the terminal and the frequency of using said processes and/or programs is collected.

4. The method according to claim 1, wherein said collected information are analysed on the terminal to send the analysis to the provider or wherein said collected information are forwarded to the provider, which analyses the tracking information.

5. The method according to claim 1, wherein the tracking and/or scanning and/or analysing of said process can be limited by configuration and/or by the user parameters, determining the frequency of scans, the type and/or area of said stored data which are allowed to be scanned, the type of running process, which are allowed to be analysed.

6. A Device providing collected information to adapt Internet contents and/or services offered by providers to an end user, comprising
- a data storage storing also user specific information,
- a network adapter allowing at least temporarily the access to a network, in particular the Internet or Intranet,
- a processing unit operating a process that becomes active, when the device is offline and/or idle and/or at low load, tracking the end user's behaviour and/or scanning the information on the data storage wherein said process collects user specific information,
transferring said collected information or information about the collected information to said Internet service provider and/or content provider, while the terminal is online and/or idle and/or at low load.

7. The device according to claim 6, wherein the collected information is categorized and may have a hierarchical structure and/or
wherein the collected information is evaluated statistically, in particular by the frequency of occurrence.

8. The device according to claim 6, wherein cookies, temporary html files, emails and other files are scanned using rules and/or text patterns
and/or,
wherein information about the installed programs and/or the running processes on the terminal and the frequency of using said processes and/or programs is collected.

9. The device according to claim 6, wherein said collected information is analysed on the terminal to send the analysis to the provider or wherein said collected information is forward to the provider, which analyses the tracking information.

10. The device according to claim 6, wherein said device is a PC and wherein the process is implemented in software.

11. A device for adapting Internet contents and/or services offered by providers to an end user, comprising
- a network adapter allowing the connection to a device, that provides user specific information, in particular to a device according to claim 6,
- a means to access said Internet contents and/or services,
- a processing unit operating a process that analyses user specific information, that have been transmitted, to determine said content and/or service that is offered to the end user, accessing said content or service.

12. The device according to the previous claim, comprising service means that provide said contents and/or services, in particular a web-service.

13. The device according to the previous claim, comprising means to identify the end-user connected to said service means, to provide said user specific content and/or services.

14. The device according to claim 11, generating new and/or modified content using a database offering classified information.

15. The device according to the previous claim, comprising a module analysing and classifying user specific information, in particular by using search pattern and/or statistical algorithm.

16. A system, in particular a network system, for adapting Internet contents and/or services offered by providers to an end user, comprising means to execute the method according to claim 1.

17. A network system for adapting Internet contents and/or services offered by providers to an end user, comprising a server according to claim 11 and a client according to claim 7, which are connected.

18. A computer loadable data structure, that provides the method according to the previous method claim 1 while being executed on one or more computers.
